# EUROPEAN PATENT APPLICATION

(11) **EP 4 116 784 A1**
(43) Date of publication of application: **11.01.2023**
(21) Application number: 22180911.4
(22) Date of filing: 24.06.2022
(51) Int. Cl.: G05B 19/406

(54) **DIAGNOSTIC SYSTEM, DIAGNOSTIC METHOD, AND CARRIER MEDIUM**

(30) Priority: 06.07.2021 JP 2021112421; 27.05.2022 JP 2022086916
(71) Applicant: Ricoh Company, Ltd., Tokyo 143-8555 (JP)
(72) Inventor: MIYARA, Gakushi, Tokyo (JP); TOKUNAGA, Toshihiro, Tokyo (JP); MIKI, Yoshihisa, Tokyo (JP)
(74) Representative: SSM Sandmair

(57) **Abstract**

A diagnostic system includes a tool (500) to perform machining on a workpiece, a test piece (400) to be subjected to test machining by the tool (500) for abnormal detection, a sensor (201) to generate sensor data representing a physical quantity generated in the test machining, a machining unit (210), and a determination unit (104). The machining unit (210) controls the tool (500) to perform the test machining in each cycle of machining on the workpiece. The determination unit (104) calculates a degree of abnormality from the sensor data of the test machining. The test piece (400) is different from the workpiece. The test machining is performed on the test piece (400) under a test machining condition corresponding to a machining condition of the machining on the workpiece.

## Description

### BACKGROUND

### Technical Field

Embodiments of the present disclosure relate to a diagnostic system, a diagnostic method, and a carrier medium.

### Related Art

For grasping a machining state of a machine tool or detecting a cutting abnormality in machining on a workpiece by the machine tool or the like, there is proposed a method of sensing vibration or the like of the machine tool.

For determining such an abnormality or the like in a machining state, there is known an apparatus that discriminates processing steps, groups the same type of processing steps, and determines a machining abnormality for each group (For example, Japanese Unexamined Patent Application Publication No. 2019-159728).

However, the related-art apparatus determines a machining abnormality on the premise that data of the same machining is repeatedly learned a plurality of times, and it is difficult to accurately determine an abnormality in processing of various kinds of small-quantity articles such as die machining.

### SUMMARY

In view of the foregoing, an object of the present disclosure is to perform efficient abnormality detection even in processing of various kinds of small-quantity articles.

In one aspect, a diagnostic system includes a tool to perform machining on a workpiece; a test piece to be subjected to test machining by the tool for abnormal detection, and a sensor to generate sensor data representing a physical quantity generated in the test machining. The test piece is different from the workpiece. The diagnostic system further includes a machining unit to control the tool to perform the test machining in each cycle of machining on the workpiece and under a test machining condition corresponding to a machining condition of the machining on the workpiece; and a determination unit to calculate a degree of abnormality from the sensor data of the test machining.

In another aspect, a diagnostic method includes performing, with a tool, test machining on a test piece for abnormal detection in each machining cycle on a workpiece subjected to machining by the tool; receiving, from a sensor, sensor data representing a physical quantity generated in the test machining on the test piece; and calculating a degree of abnormality from the sensor data of the test machining on the test piece. The test piece is different from the workpiece, the test machining being performed on the test piece under a test machining condition corresponding to a machining condition of the machining on the workpiece.

In another aspect, a carrier medium carries computer readable codes for controlling a computer system to carry out the method described above.

According to one or more aspects, abnormality is detected efficiently even in processing of various kinds of small-quantity articles.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a block diagram illustrating an overall configuration of a diagnostic system according to one embodiment;
FIG. 2 is a block diagram illustrating an example of a hardware configuration of a machine (a machine tool) according to one embodiment;
FIG. 3 is a block diagram illustrating an example of a hardware configuration of a state monitoring apparatus according to one embodiment;
FIG. 4 is a block diagram illustrating an example of functional configurations of the state monitoring apparatus illustrated in FIG 3 and the machine illustrated in FIG. 2;
FIG. 5 is a diagram illustrating processing assumed by a related-art system;
FIG. 6 is a diagram illustrating association between machining information and sensor data;
FIG. 7 is a diagram illustrating an example of single-article machining cycles in which machining is different for each cycle;
FIG. 8 is a diagram illustrating a configuration of the machine according to one embodiment;
FIGS. 9A to 9D are diagrams illustrating types of machining on test pieces;
FIG. 10 is a diagram illustrating an example of replacement of a test piece;
FIGS. 11A and 11B are diagrams illustrating abnormality diagnosis using a test piece according to one embodiment;
FIGS. 12A and 12B are diagrams illustrating abnormality detection based on a machined portion of a test piece according to one embodiment;
FIG. 13 is a diagram illustrating examples of calculation of the degree of abnormality;
FIG. 14 is a diagram illustrating an example of a graphical user interface (GUI) screen for notifying a user of a result of abnormality determination;
FIG. 15 is a flowchart illustrating an example of a process using an abnormality detection result based on a machined portion of a test piece, according to one embodiment;
FIG. 16 is a diagram illustrating an example of the process using an abnormality detection result based on the machined portion of the test piece; and
FIG. 17 is a diagram illustrating an example of movement of a tool in a machine tool that performs test machining and machining for products.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Descriptions are given below in detail of a diagnostic system and a diagnostic method according to embodiments of the present disclosure, with reference to the drawings. The present disclosure, however, is not limited to the following one or more embodiments, and elements of the following one or more embodiments include elements that may be easily conceived by those skilled in the art, those being substantially the same ones, and those being within equivalent ranges. Furthermore, various omissions, substitutions, changes, and combinations of the constituent elements may be made without departing from the gist of the following one or more embodiments.

### Overview of Configuration of Diagnostic System

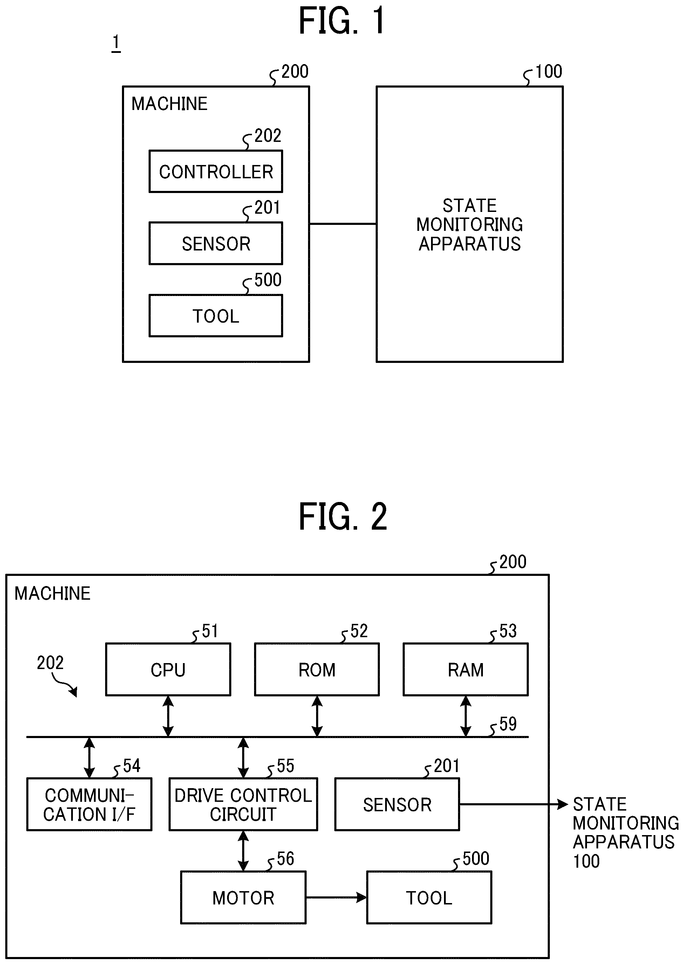

FIG. 1 is a schematic view illustrating an overall configuration of a diagnostic system according to the present embodiment. A description is given below of the overview of a diagnostic system 1 according to the present embodiment with reference to FIG. 1.

As illustrated in FIG. 1, the diagnostic system 1 according to the present embodiment includes a state monitoring apparatus 100 and a machine 200 (a machine tool). The machine 200 is connected to the state monitoring apparatus 100 to communicate with each other. Although one machine 200 is connected to the state monitoring apparatus 100 in the example in FIG. 1, the configuration is not limited thereto, and a plurality of machine 200 may be connected to the state monitoring apparatus 100 so as to be able to communicate with each other.

The state monitoring apparatus 100 is an apparatus that is connected to the machine 200 to communicate with each other and monitors the state of the operation of the machine 200.

The machine 200 is a machine tool that uses a tool 500 to perform machining such as cutting, grinding, or polishing on an object (workpiece) to be machined. The machine 200 is an example of a machine to be monitored by the state monitoring apparatus 100. The subject of monitoring is not limited to a machine tool and may be any machine to be monitored, such as assembling machine, a measuring machine, an inspection machine, or a cleaning machine. Hereinafter, the machine 200 will be described as an example of the subject of monitoring.

The machine 200 includes the tool 500, a sensor 201 installed in the machine 200, and a controller 202 that controls the machine 200.

The tool 500 is a drill, an end mill, a cutting tool tip, a grindstone, or the like. The tool 500 performs various types of machining on a workpiece described later.

The sensor 201 detects a physical quantity and outputs the detected physical quantity information as a detection result (sensor data) to the state monitoring apparatus 100. The physical quantity detected is vibration, sound, or the like generated when the tool 500 (such as a drill, end mill, cutting tool tip, or grindstone) installed in the machine 200 contacts the workpiece to be machined during the processing, or vibration, sound, or the like generated by the tool 500 or the machine 200 itself. The sensor 201 is, for example, a microphone, a vibration sensor, an accelerometer, or an acoustic emission (AE) sensor and is installed adjacent to the tool 500 or adjacent to a motor of the machine 2003, so as to detect the vibration, the sound, or the like. The sensor 201 outputs waveform data as measurement data to the state monitoring apparatus 100.

The controller 202 outputs, to the state monitoring apparatus 100, as operation information of the machine 200, information such as a spindle rotation speed, a feed speed, a spindle coordinate value, and a current value of the spindle at the time of machining. The controller 202 further outputs, to the state monitoring apparatus 100, a type of the tool 500, a manufacturer of the tool 500, and a diameter of the tool 500 when the user has inputted such information.

The machine 200 and the state monitoring apparatus 100 may be connected in any connection form. For example, the machine 200 and the state monitoring apparatus 100 may be connected by a dedicated connection line, a wired network such as a wired local area network (LAN), a wireless network, or the like.

Note that any number of sensors 201 may be used. The machine 200 may be provided with a plurality of sensors 201 of the same type to detect the same physical quantity or a plurality of sensors 201 of different types to detect different physical quantities.

The sensor 201 and the controller 202 may be incorporated in advance in the machine 200 or may be attached to the machine 200 being a finished product.

### Hardware Configuration of Machine Tool

FIG. 2 is a block diagram illustrating an example of a hardware configuration of the machine 200 (machine tool). A description is given below of the hardware configuration of the machine 200 according to the present embodiment with reference to FIG. 2.

As illustrated in FIG. 2, the controller 202 of the machine 200 includes a central processing unit (CPU) 51, a read only memory (ROM) 52, a random access memory (RAM) 53, a communication interface (I/F) 54, a drive control circuit 55, and a motor 56, which are connected to one another via a bus 59.

The sensor 201 is connected to the state monitoring apparatus 100 to communicate with each other.

The CPU 51 is a processor that controls the entire operation of the machine 200. The CPU 51 executes a program stored in the ROM 52 or the like using, for example, the RAM 53 as a work area, to control the entire operation of the machine 200 and implement machining functions.

The communication I/F 54 is an interface for communicating with external devices such as the state monitoring apparatus 100. The drive control circuit 55 is a circuit that controls the drive of the motor 56. The motor 56 drives the tool 500 used in machining. Examples of the tool 500 includes a drill, an end mill, a cutting tool tip, a grindstone, and a table that supports an object to be machined and moves corresponding to the machining. The sensor 201 is as described above.

### Hardware Configuration of State Monitoring Apparatus

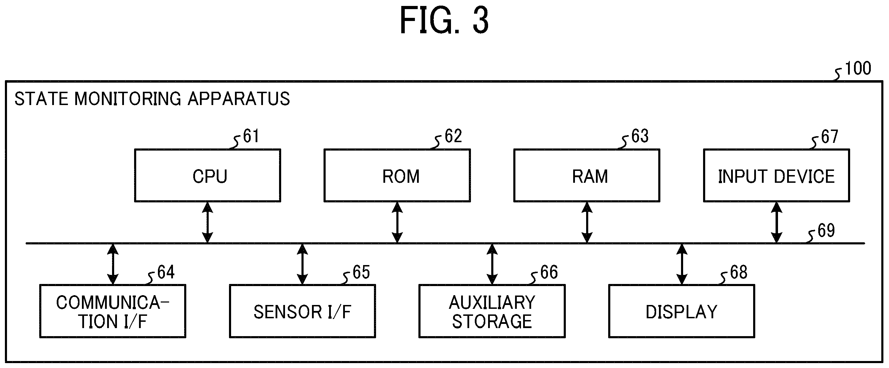

FIG. 3 is a block diagram illustrating an example of the hardware configuration of the state monitoring apparatus 100. A description is given below of the hardware configuration of the state monitoring apparatus 100 according to the present embodiment with reference to FIG. 3.

As illustrated in FIG. 3, the state monitoring apparatus 100 includes a CPU 61, a ROM 62, a RAM 63, a communication I/F 64, a sensor I/F 65, an auxiliary memory 66, an input device 67, and a display 68, which are connected via a bus 69 to communicate with each other.

The CPU 61 is a processor that controls the entire operation of the state monitoring apparatus 100. The CPU 61 executes a program stored in the ROM 62 or the like using, for example, the RAM 63 as a work area, to control the entire operation of the state monitoring apparatus 100 and implement various state monitoring functions.

The communication I/F 64 is an interface for communication with an external apparatus such as the machine 200. The communication I/F 64 is, for example, a network interface card (NIC) in compliance with transmission control protocol/internet protocol (TCP/IP).

The sensor I/F 65 is an interface for receiving a detection result from the sensor 201 installed in the machine 200.

The auxiliary memory 66 is a non-volatile memory such as a hard disk drive (HDD), a solid state drive (SSD), or an electrically erasable programmable read-only memory (EEPROM). The auxiliary memory 66 stores various data such as setting information of the state monitoring apparatus 100, detection results and context information received from the machine 200, an operating system (OS), and an application program. The auxiliary memory 66 is a memory of the state monitoring apparatus 100 but is not limited thereto. For example, the auxiliary memory 66 may be a storage device outside the state monitoring apparatus 100 or a storage device included in a server that performs data communication with the state monitoring apparatus 100.

The input device 67 is, for example, a mouse or keyboard for inputting characters and numbers, selecting an instruction, and moving a cursor.

The display 68 is, for example, a cathode ray tube (CRT) display, a liquid crystal display (LCD), or an organic electro luminescence (EL) display that displays characters, numbers, various screens, operation icons, and the like.

Note that the hardware configuration illustrated in FIG. 3 is one example. Some of the components illustrated can be omitted, or one or more different devices may be provided. For example, in a case where the state monitoring apparatus 100 is dedicated to diagnosis of the machine 200 and transmits a diagnostic result to an external server or the like, the input device 67 and the display 68 may be dispensed with.

Configuration and Operation of Functional Blocks of State Monitoring Apparatus and Machine

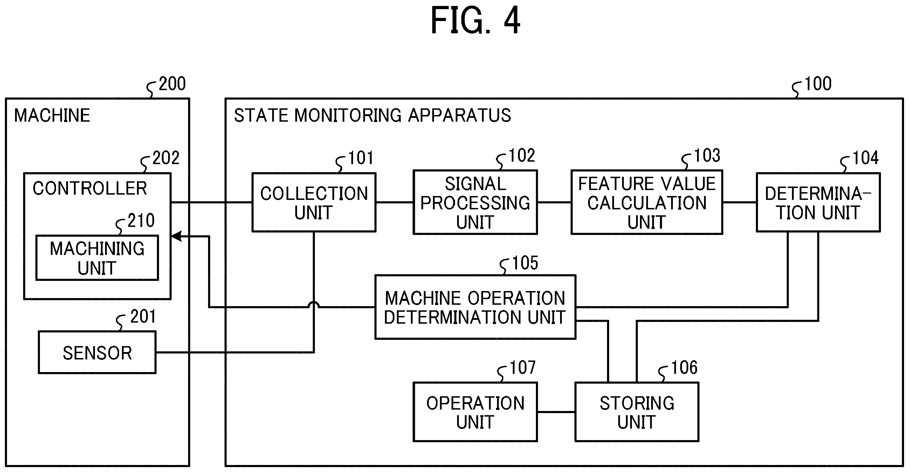

FIG. 4 is a block diagram illustrating an example of the functional configurations of the state monitoring apparatus 100 and the machine 200. Descriptions are given below of the functional configurations and operations of the state monitoring apparatus 100 and the machine 200 according to the present embodiment, with reference to FIG. 4.

As illustrated in FIG. 4, the machine 200 includes a machining unit 210. The machining unit 210 is a functional unit that controls the motor 56 to control the driving of the tool 500. The machining unit 210 may be implemented by the CPU 51 (in FIG. 2) executing a program, that is, by software. Alternatively, the machining unit 210 may be implemented by hardware such as an integrated circuit (IC) or by a combination of software and hardware.

As illustrated in FIG. 4, the state monitoring apparatus 100 includes a collection unit 101, a signal processing unit 102, a feature value calculation unit 103, a determination unit 104, a machine operation determination unit 105, a storing unit 106, and an operation unit 107. The collection unit 101, the signal processing unit 102, the feature value calculation unit 103, the determination unit 104, the machine operation determination unit 105, the storing unit 106, and the operation unit 107 illustrated in FIG. 4 may be implemented by the CPU 61 (in FIG. 3) executing a program (that is, by software), by hardware such as an IC, or by a combination of software and hardware.

The collection unit 101 receives operation information from the controller 202 and information such as measured waveform from the sensor 201. The collection unit 101 associates e.g., the waveform measured by the sensor 201 with the operation information of the machine 200 based on the received information. As one example, the collection unit 101 stores in an auxiliary memory the measured waveform and the time at which the operation information of the machine 200 (such as the tool number, the sequence number, or the spindle rotation speed) is received and synchronizes the waveform with the respective times, in order to associate the waveform with the operation information. The collection unit 101 transmits the associated data to the signal processing unit 102.

The signal processing unit 102 performs predetermined pre-processing. The signal processing unit 102 transmits the pre-processed measurement data and operation information to the feature value calculation unit 103.

The feature value calculation unit 103 calculates a feature value of machining, to be used in determination by the determination unit 104, from the pre-processed measurement data and the operation information. The feature value calculation unit 103 transmits the feature value of machining to the determination unit 104. The feature value of machining may be any information that indicates a feature of the information (e.g., detection result) from the sensor 201. For example, when the detection result from the sensor 201 is acoustic data collected by a microphone, the feature value calculation unit 103 may calculate, as a feature value of machining, energy, a frequency spectrum, or mel-frequency cepstrum coefficients (MFCC).

The determination unit 104 calculates a degree of abnormality based on the feature value of machining. The degree of abnormality is calculated in accordance with the subject for abnormality detection (such as the workpiece, the tool 500, the motor of the machine 200, and the spindle of the machine 200). Specifically, the determination unit 104 calculates the degree of abnormality using, for example, thresholding or machine learning based on the feature value of machining. Examples of machine learning include support vector machine (SVM) and neural network. Note that the method for determining the degree of abnormality is not limited thereto and may be any method for calculating the degree of abnormality from the feature value. For example, instead of directly comparing the degree of abnormality with a threshold value, a value indicating fluctuations in the abnormality degree may be compared with a threshold value. The determination unit 104 transmits the degree of abnormality to the machine operation determination unit 105 and the storing unit 106.

The storing unit 106 stores, in a memory, the degree of abnormality calculated by the determination unit 104 in association with the operation information of the machine 200.

Alternatively, the operation unit 107 may receive the degree of abnormality, instead of acquiring the degree of abnormality from the determination unit 104. The operation unit 107 receives an abnormality degree input from the input device 67 such as a keyboard or a touch panel, and the storing unit 106 stores the abnormality degree in association with operation information of the machine 200.

The machine operation determination unit 105, which is an operation determination unit, determines the action for the machine 200 (tool 500) to be performed, in accordance with the degree of abnormality calculated by the determination unit 104 or the degree of abnormality stored in the storing unit 106. For example, when the degree of abnormality indicates a significant difference from the degrees of abnormality in similar machining processes performed so far, the machine operation determination unit 105 determines the action for the machine 200 (tool 500) such as immediately stopping the machining and sending a command to the controller 202 of the machine 200.

Next, a machining program for general cutting machining will be described.

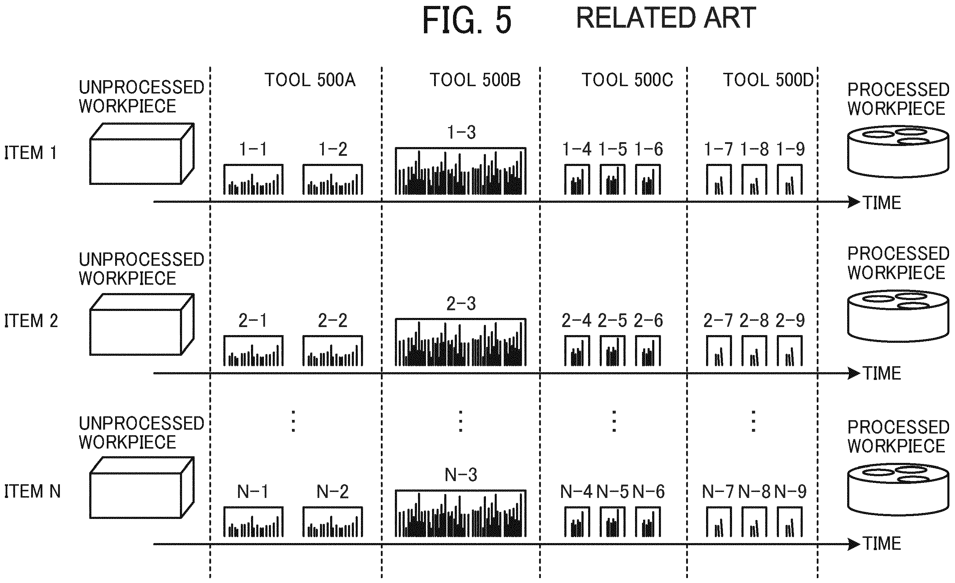

FIG. 5 is a diagram illustrating machining assumed to be performed by a machine tool system of related art. Hereinafter, tools 500A, 500B, 500C, 500d, and 500E refers to different types of tools 500. As illustrated in FIG. 5, in a case where an unmachined workpieces (items 1, 2, to N) are machined according to a machining program, when the type of the tool 500 is focused as the information acquired from the controller of the machine tool, after a plurality of machining processes is performed by the tool 500A, the tool 500A is replaced with another tool. In this case, since the same tool 500A is used in the processes 1-1 and 1-2, the processes 1-1 and 1-2 are regarded as processes having the same 35rmation. When a machining program is executed multiple number of times, the processes 1-1, 2-1, and N-1 in which similar machining is performed are regarded as processes having the same machining information. In this way, the related art system performs machining processes to be associated with the same machining information when operating according to the same machining program or performing a plurality of machining cycles. The term "cycle" in this specification represents a sequence of machining processes performed on one article. Examples of the machining information to be acquired from the controller of the machine tool (the machine 200) and is to be associated with the sensor data include, in addition to the type of the tool 500, the number of times of machining, the machining program, the spindle rotation speed, the sequence number, and other machining-related information. An example to which such a system is applied is factory line for producing a plurality of identical products.

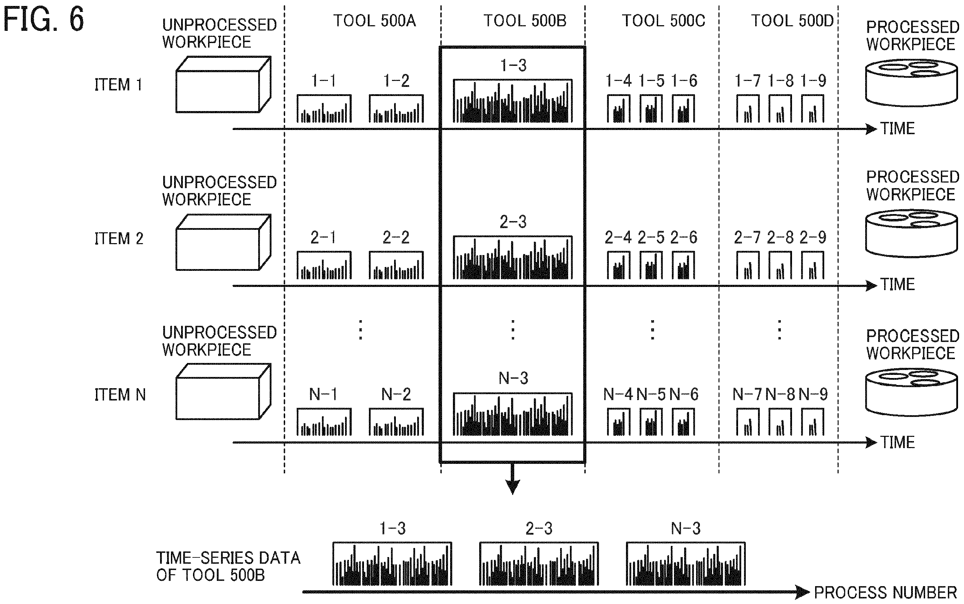

FIG. 6 is a diagram illustrating association between machining information and sensor data in the case of producing a plurality of identical products. In order to observe a change in feature values of a particular type of machining, it is preferable to group a plurality of processes having the same machining information in a machining program in a case where a machining program includes the plurality of processes having the same machining information or a case where the same machining program is executed a plurality of times. There is a case where one machining program includes a plurality of processes having the same machining information. An example thereof is the plurality of processes 1-4, 1-5, and 1-6 using the same tool 500C, and the processes 1-4, 1-5, and 1-6 are grouped. In another case, the same machining program is executed multiple number of times. An example thereof is the plurality of processes 1-3, 2-3, and N-3 having the same machining information, and the processes 1-3, 2-3, and N-3 are grouped. Then, as illustrated in FIG. 6, the state monitoring apparatus 100 performs the abnormality diagnosis using the grouped time-series data of the same machining information.

Next, a description is given of a case in which machining is different for each cycle in single-article machining.

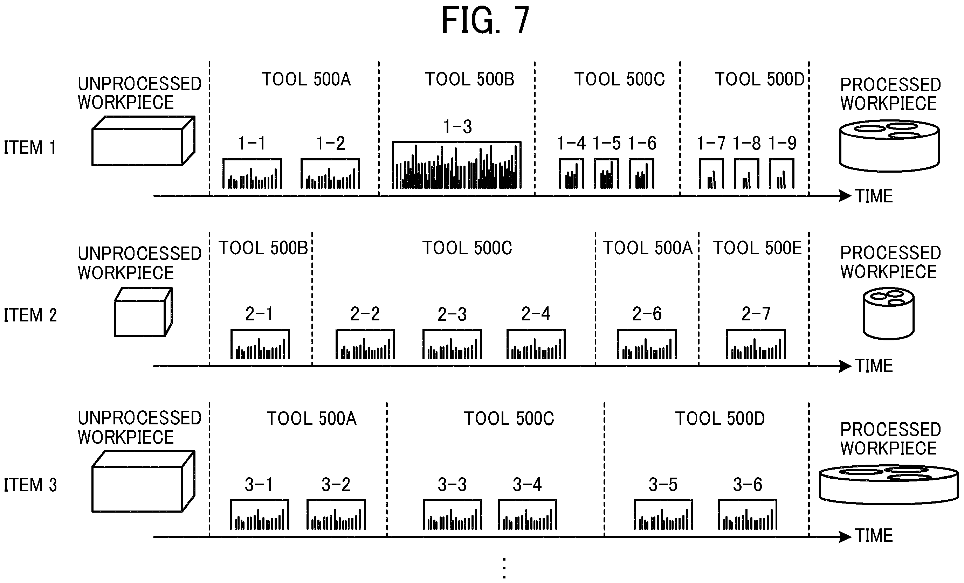

FIG. 7 is a diagram illustrating an example of single-article machining cycles in which machining is different for each cycle. Unlike a factory line for repeating a plurality of processes to produce identical products, FIG. 7 illustrates single-article machining such as die machining. In the single-article machining, the shape and size of the workpiece, the shape of the finished product, and the structure of the numerical control (NC) program differ for each cycle. Therefore, even if the same tool is used, the machining position and the machining time may vary for each machining process. Also, as illustrated in FIG. 7, the tool used in the machining process vary depending on the cycle. Although the machining processes 1-1, 2-6, and 3-1 are performed by the same tool 500A, there is a possibility that the sensed feature values are not comparable because the workpieces and the machining positions are different. Therefore, in a case where machining is different for each cycle in single-article machining, there is no machining process having the same context as described in FIG. 6, or machining processes are not easily compared.

Therefore, in the present embodiment, the machine 200 is provided with a test piece (test workpiece) for abnormality diagnostic measurement, separately from the workpiece to be machined.

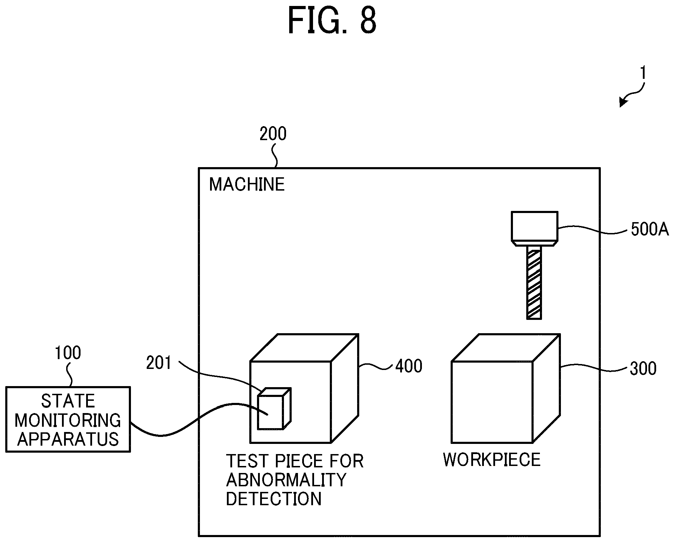

FIG. 8 is a diagram illustrating the configuration of the machine 200. As illustrated in FIG. 8, the machine 200 includes a test piece 400 (test workpiece) for abnormality diagnostic measurement, separately from a workpiece 300 to be processed in the machine 200. The test piece 400 is made of a material to be machined by general tools such as a drill, an end mill, and a face mill. That is, it is not necessary to prepare the test piece 400 for each tool 500. The size and material of the test piece 400 are designed in accordance with the tool 500 to be used and physical information to be acquired. A plurality of test pieces 400 may be provided in accordance with the tools 500 to be used.

The test piece 400 may include a built-in sensor 201, or the sensor 201 may be attached to the test piece 400. The sensor 201 provided to the test piece 400 transmits the sensed physical quantity to the state monitoring apparatus 100. Use of the test piece 400 in this manner enables reliable executing of the same machining for each machining cycle even in single-article machining and enables abnormality diagnosis of the tool 500. Details will be described later.

The machining on the test piece 400 is designed to be physically the same as the machining performed on the workpiece 300 (to become a product) in the machine 200. With this configuration, the abnormality detection method for, such as, a factory line in which the same machining is repeatedly performed is also applicable to small quantity machining such as die machining and to machining of various kinds of small-quantity articles. Desirably, for comparison, the machining on the test piece 400 and the machining on the workpiece 300 are performed under the same machining conditions. However, the machining of the test piece 400 may be simplified depending on the complexity of the machining process and the state of the workpiece 300. However, regarding the machining process repeatedly performed on the test piece 400 by the same tool 500, the tool 500 repeatedly performs the machining process on the test piece 400 under the same machining conditions.

Types of machining on the test piece 400 will be described.

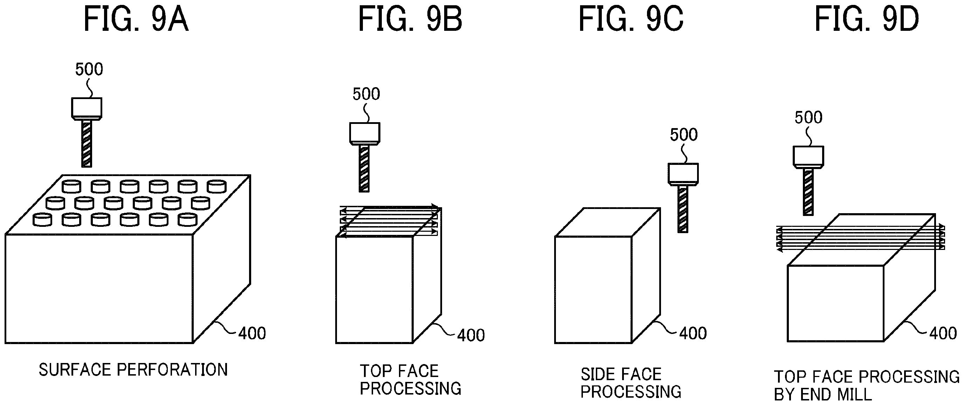

FIGS. 9A to 9D are diagrams illustrating types of machining on the test piece 400. As illustrated in FIGS. 9A to 9D, the type of machining on the test piece 400 and replacement timing of the test piece 400 are determined in accordance with the tool 500 to be used. As illustrated in FIG. 9A, when the tool 500 is a perforation tool such as a drill, the surface of the test piece 400 is perforated at uniform intervals. In this case, the test piece 400 can be used until the entire surface of the test piece 400 is processed. As illustrated in FIGS. 9B and 9C, when the tool 500 is a face mill, an end mill, or the like, a top face or a side face of the test piece 400 is processed.

Note that, depending on the type or diameter of the tool 500 to be used, the physical quantity to be sensed may significantly differ due to a difference in the machining position such as the side face and the central portion of the test piece 400. Then, abnormality may not be properly determined. As illustrated in FIG. 9D, only the central portion of the test piece 400 may be used for abnormality determination without using end portions.

Next, replacement of the test piece 400 will be described.

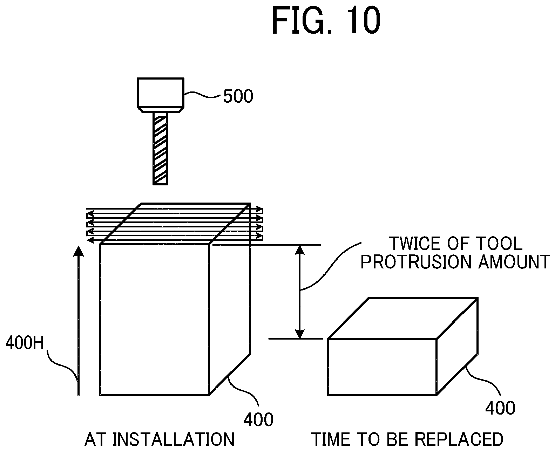

FIG. 10 is a diagram illustrating replacement of the test piece 400. The test piece 400 is replaced when the machining area is reduced due to continuation of the machining on the test piece 400. For example, in the case of drilling, after the entire surface of the test piece 400 is machined, machining is not feasible, and the test piece 400 is replaced. In the case of surface machining by a face mill, the length of the test piece 400 (the height indicated by arrow 400H in FIG. 10) becomes shorter as the machining is continued. The machining of the shortened test piece 400 affects the physical quantity to be sensed due to the occurrence of chatter or a difference in physical characteristics. Accordingly, the replacement timing is determined from the length of the test piece 400 at the time of installation, the protrusion amount of the tool 500 to be used, and the like. For example, referring to FIG. 10, in a case where chattering is likely to occur due to the relation between the tool 500 and the length of test piece 400, when the test piece 400 has been reduced by machining by twice or more of the protrusion amount of the tool 500, the test piece 400 is replaced. A test piece length XX millimeters and a tool length YY millimeters in a state in which the test piece 400 has been machined by twice or more the protrusion amount of the tool 500 may be specified as a condition under which chatter is likely to occur. The test piece 400 is replaced when the condition is satisfied. The values of XX and YY may be freely determined depending on the situation at the site.

As described above, the test piece 400 does not need to be replaced each of test machining on the test piece 400, and the machine operation determination unit 105 of the state monitoring apparatus 100 may issue the replacement command as appropriate.

Next, a description is given of an abnormality diagnosis using the test piece 400, performed by the state monitoring apparatus 100.

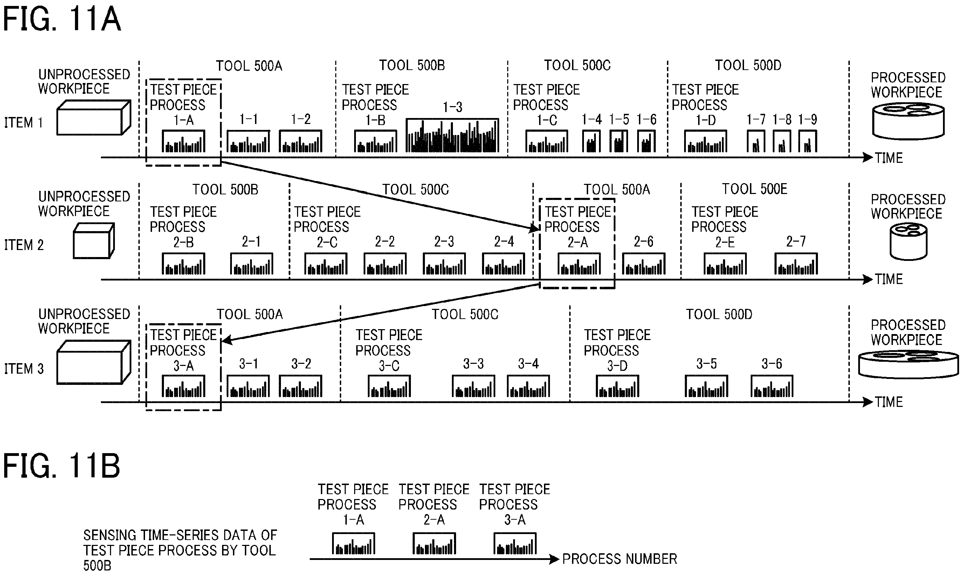

FIGS. 11A and 11B are diagrams illustrating abnormality diagnosis using the test piece 400. As illustrated in FIG. 11A, the machine 200 performs machining on the test piece 400 at a desired time point in each machining cycle. In this way, the state monitoring apparatus 100 obtains grouped time-series data of the same machining information from the sensor data of the test machining performed in each machining cycle of the workpiece, to perform the abnormality diagnosis.

As illustrated in FIG. 11A, unlike the machining processes 1-1, 2-6, and 3-1, the test machining processes 1-A, 2-A, and 3-A are guaranteed to be the same machining type performed on the same test piece 400 using the same tool (tool 500A). Accordingly, feature values extracted from sensed physical quantities are comparable to each other. The machining processes using the tool 500B and subsequent machining processes are handled in the same manner.

The order of machining on the test piece 400 is not limited to the head of the machining process but may be any timing such as during or after the machining process performed by the same tool 500.

The sensor 201 of the test piece 400 transmits the sensed time-series data to the state monitoring apparatus 100. The collection unit 101 collects machining information of each test machining process on the test piece 400 and associates the machining information with the sensor data. As a result, grouped time-series data of the same machining information is obtained from the data of test machining processes.

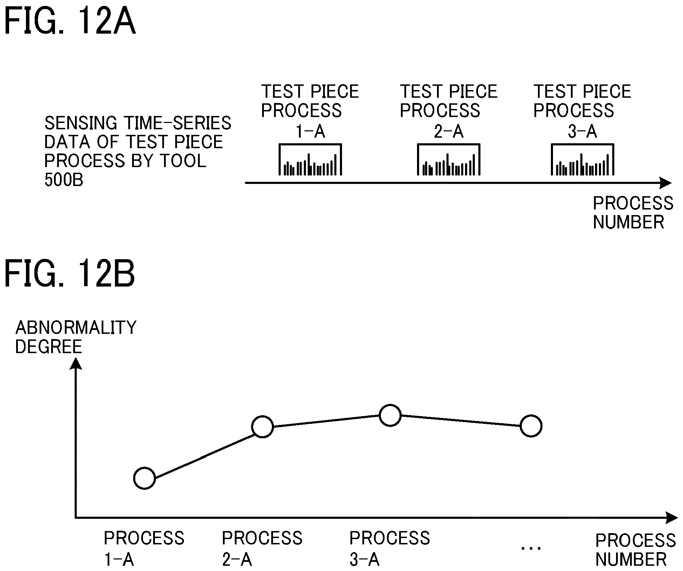

FIGS. 12A and 12B are diagrams illustrating abnormality detection based on a machined portion of the test piece 400. As illustrated in FIGS. 12A and 12B, the state monitoring apparatus 100 calculates the degree of abnormality based on the feature value calculated from the physical quantity of the same machining information obtained by machining on the test piece 400. When the test piece 400 is used, a time-series change in the state of the tool 500 appears as a degree of abnormality. Accordingly, the degree of wear of the tool 500, breakage of the tool 500, occurrence of chipping, or the like is an index of abnormality.

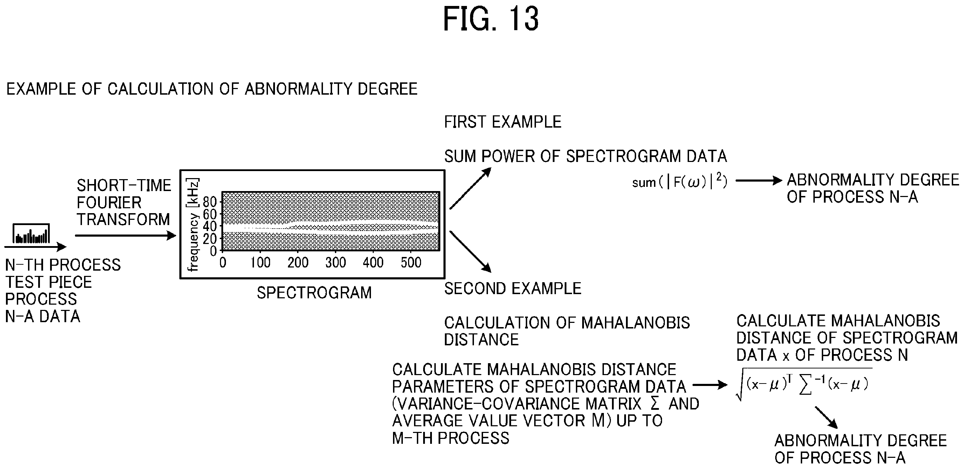

A description is given of an example of calculation of the degree of abnormality by the determination unit 104 of the state monitoring apparatus 100. FIG. 13 is a diagram illustrating an example of calculation of the degree of abnormality. FIG. 13 illustrates an example of calculation of the degree of abnormality for the data of test machining in N-th cycle which is, for example, any of the test machining processes 1-A, 2-A, and 3-A in the first, second, and third cycles in FIGS. 12A and 12B.

FIG. 13 illustrates a first example in which the power of vibration is calculated as the degree of abnormality. First, the determination unit 104 of the state monitoring apparatus 100 converts the sampled data of the test machining in the N-th cycle (machining process N-A) into a spectrogram by short-time Fourier transform. Next, the determination unit 104 of the state monitoring apparatus 100 calculates the total value of the power of the spectrogram data. The determination unit 104 of the state monitoring apparatus 100 sets the calculated total value of the power of the spectrogram data as the value of the degree of abnormality for the sampled data (machining process N-A) of the N-th cycle.

FIG. 13 also illustrates a second example of calculation of the degree of abnormality in which the Mahalanobis distance is used as the degree of abnormality. The Mahalanobis distance is a distance that clarifies a relationship with a known sample by taking a correlation between multiple variables. First, the determination unit 104 of the state monitoring apparatus 100 converts the sampled data of the test machining in the N-th cycle (machining process N-A) into a spectrogram by short-time Fourier transform. Next, the determination unit 104 of the state monitoring apparatus 100 learns the spectrogram data up to the M-th cycle (M<N) and calculates a variance-covariance matrix Σ and a mean value vector µ which are Mahalanobis distance parameters. Next, the determination unit 104 of the state monitoring apparatus 100 calculates a Mahalanobis distance for inferring whether there is a difference between the parameters (learning data) of the data up to the M-th cycle and the spectrogram data of the N-th cycle. The determination unit 104 of the state monitoring apparatus 100 sets the calculated Mahalanobis distance as the value of the degree of abnormality for the sampled data (machining process N-A) of the N-th cycle.

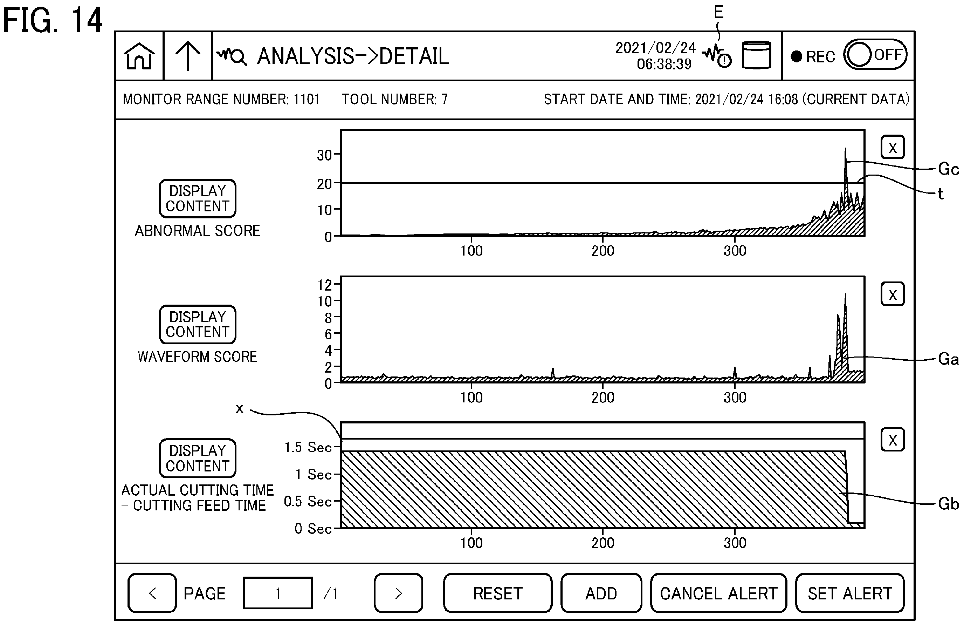

FIG. 14 is a diagram illustrating an example of a graphical user interface (GUI) screen for notifying a user of a result of abnormality determination. The determination unit 104 of the state monitoring apparatus 100 displays, on the display 68, a GUI screen for notifying the user of the result of abnormality determination. As illustrated in FIG. 14, the determination unit 104 displays a graph of the degree of abnormality corresponding to the machining section on the GUI screen. As illustrated in FIG. 14, the determination unit 104 of the state monitoring apparatus 100 displays, for example, an abnormal machining score Gc indicating the degree of abnormality in addition to a waveform score Ga and a machining section Gb on the GUI screen.

The waveform score Ga represents waveform data detected by the sensor 201.

The machining section Gb is data indicating a section during which the machine 200 performs a predetermined operation (for example, corresponds to a time during which the machine 200 actually cuts a workpiece). Note that, relative to the machining section Gb, a time x in FIG. 14 (horizontal line) indicates a cutting feed time for cutting the workpiece.

The abnormal machining score Gc is data indicating the degree of abnormality calculated by the determination unit 104. The abnormal machining score Gc in FIG. 14 is an example in which the Mahalanobis distance is used as the degree of abnormality. As indicated by an abnormal machining score Gc in FIG. 14, when the degree of abnormality calculated by the determination unit 104 exceeds a threshold value t, the determination unit 104 displays an error alert E for abnormality notification on the GUI screen. Note that the determination unit 104 may freely set the threshold value.

In the present embodiment, when the degree of abnormality calculated by the determination unit 104 exceeds the threshold value t, the error alert E for abnormality notification is displayed on the GUI screen. However, abnormality notification is not limited thereto, and a text or an icon indicating abnormal or normal may be displayed on the GUI screen.

Further, the abnormality notification is not limited to the display of the error alert E on the GUI screen. In one example, the determination unit 104 of the state monitoring apparatus 100 has a function of outputting a notification to the controller 202 of the machine 200. Then, the determination unit 104 of the state monitoring apparatus 100 transmits an abnormality notification to the controller 202 of the machine 200 when the degree of abnormality calculated by the determination unit 104 exceeds the threshold value t. For example, the controller 202 of the machine 200 receives the abnormality notification and stops the machining or turns on a rotary beacon light of the machine 200 according to a program.

Next, an example of operation using an abnormality detection result based on a machined portion of the test piece 400 will be described.

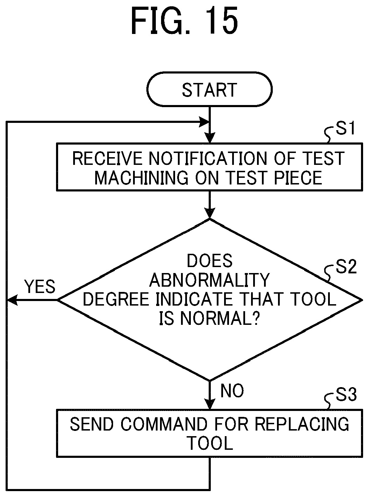

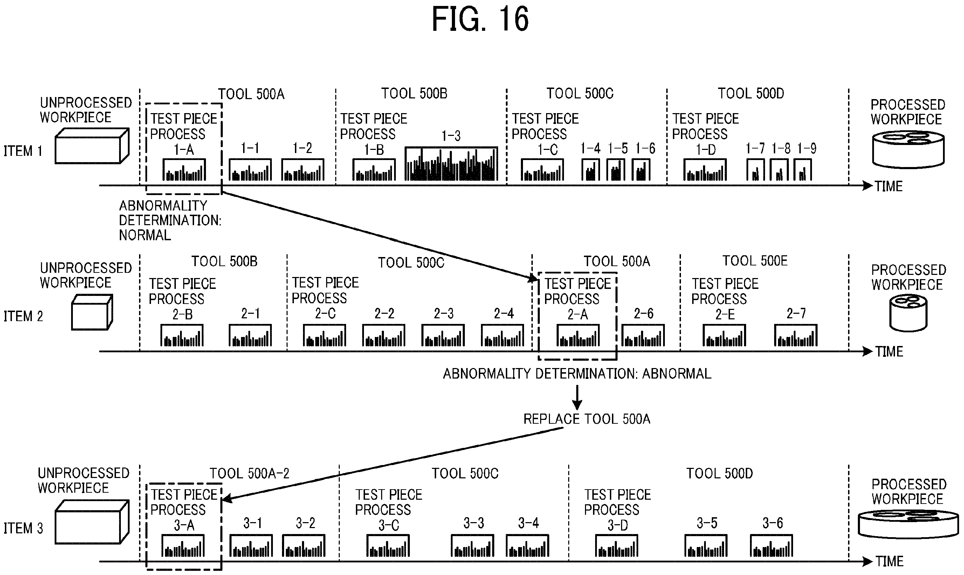

FIG. 15 is a flowchart illustrating an example of an operation using an abnormality detection result based on a machined portion of the test piece 400, and FIG. 16 is a diagram illustrating an operation using the abnormality detection result based on the machined portion of the test piece 400.

As described above, the machine operation determination unit 105 of the state monitoring apparatus 100 has the function of sending, to the machine 200, a command based on the degree of abnormality of the machined portion of the test piece 400.

FIGS. 15 and 16 illustrate an example in which the tool 500 is replaced before the next machining when the tool 500 is determined to be abnormal based on the degree of abnormality.

As illustrated in FIG. 15, the state monitoring apparatus 100 receives, from the machine 200, notification indicating that the tool 500A has machined the test piece 400 (step S1). The collection unit 101 receives the machining information and the sensor data of the test machining on the test piece 400 and associates the machining information with the sensor data. Next, the machine operation determination unit 105 of the state monitoring apparatus 100 determines whether the tool 500A is in a normal state based on the degree of abnormality of the machined portion of the test piece 400 (step S2).

The determination unit 104 of the state monitoring apparatus 100 uses, as an index, for example, determination of wear, breakage, or chipping of the tool 500, or a degree of change from the previous degree of abnormality in the determination of the degree of abnormality of the machined portion of the test piece 400.

As illustrated in FIG. 16, when the machine operation determination unit 105 of the state monitoring apparatus 100 determines that the tool 500A is not normal from the abnormality detection result of the machining process 2-A on the item 2 (No in step S2), the machine operation determination unit 105 sends a command to the machine 200 to replace the tool 500A with a new tool 500A at a desired time point before the start of the machining on the item 3 (step S3). The content of the command sent from the machine operation determination unit 105 of the state monitoring apparatus 100 is not limited to the replacement of the tool 500 but may be temporary stop of the machine 200, emergency stop of the machine 200, or generation of an alert. Thereafter, the machine operation determination unit 105 of the state monitoring apparatus 100 waits for the next machining.

Next, descriptions are given of the movement of the tool 500 in the machine 200 that performs a test machining process on the test piece 400 and an actual machining process on the workpiece 300.

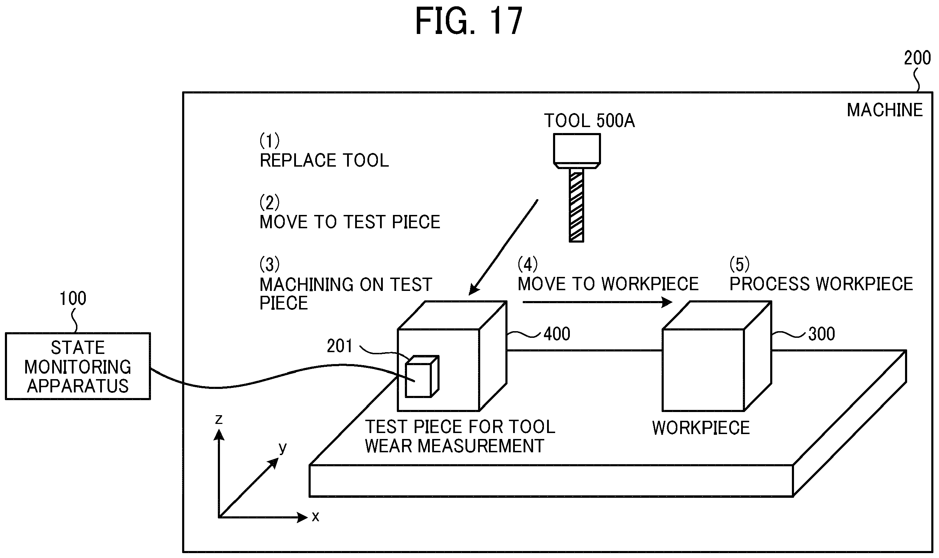

FIG. 17 is a diagram illustrating an example of movement of the tool 500 in the machine 200 that performs a test machining process and an actual machining process. In general, the tool 500 of the machine 200 is moved by the z-axis direction movement of the spindle to which the tool 500 is attached or the x-axis or y-axis direction movement of a table on which the workpiece 300 is placed. For example, a description is given of an example of moving the tool 500A in the machining of the item 1 in FIG. 11A.

In FIG. 17, the tool is replaced with the tool 500A (1), after which the machining unit 210 of the machine 200 moves the tool 500A toward the test piece 400 (2). After moving the tool 500A to the test piece 400, the machining unit 210 of the machine 200 performs machining on the test piece 400 (3). When the abnormality determination result determined from the physical quantity of the test piece 400 sensed by the sensor 201 does not indicate an abnormality, the machining unit 210 of the machine 200 moves the tool 500A toward the workpiece 300 to be processed to a product (4). Then, the tool 500A performs the machining processes 1-1 and 1-2 (see FIG. 11A) on the workpiece 300 (5). After the machining processes 1-1 and 1-2 on the workpiece 300 are completed, the tool 500A is replaced with the tool 500B. Thereafter, the machine 200 repeats the machining on the test piece 400 and the abnormality determination in the same procedure.

As described above, in the present embodiment, in the case of machining of various kinds of small-quantity articles, a test workpiece (test piece) for tool abnormality detection is prepared in addition to a workpiece to be actually machined, and the test piece is machined at a timing desired for abnormality detection, to acquire vibration (and other sensing signals) for abnormality detection regardless of the actual workpiece. Then, abnormality determination is performed using the data of test piece machining. As a result, abnormality detection is efficiently performed even in machining of various kinds of small-quantity articles.

The program executed in the state monitoring apparatus 100 and the machine 200 according to the embodiment described above may be provided by being loaded in a ROM or the like in advance.

Alternatively, the program executed by the state monitoring apparatus 100 and the machine 200 according to the embodiment described above may be provided as a computer program product stored in a computer-readable recording medium, such as a compact disc read only memory (CD-ROM), a flexible disk (FD), a compact disc recordable (CD-R), and a digital versatile disk (DVD) in a file format installable or executable.

Further, the program executed by the state monitoring apparatus 100 and the machine 200 according to the embodiment described above may be stored on a computer connected to a network such as the Internet, to be downloaded via the network. Further, the computer program executed by the state monitoring apparatus 100 and the machine 200 according to the embodiment described above may be provided or distributed via a network such as the Internet.

The program executed by the state monitoring apparatus 100 and the machine 200 according to the embodiment described above is in a modular configuration including the above-described functional units. As hardware, as the CPU (a processor) reads the program from the above-mentioned ROM and executes the program, the above-described functional units are loaded and implemented (generated) in a main memory.

Aspects of the present disclosure are, for example, as follows.

### Aspect 1

A diagnostic system includes a test piece to be machined by a tool for abnormal detection, a machining unit, a sensor, and a determination unit. The test piece is different from workpieces subjected to machining by the tool.

The machining unit controls the tool to perform test machining on the test piece in accordance with the machining performed on the workpiece in a given timing in each cycle of machining on the workpiece.

The sensor generates sensor data representing a physical quantity generated in the test machining on the test piece.

The determination unit calculates a degree of abnormality from the sensor data of the test machining on the test piece.

### Aspect 2

The diagnostic system of aspect 1 further includes an operation determination unit that determines an action for the tool based on the degree of abnormality calculated by the determination unit and outputs a command indicating the action for the tool.

### Aspect 3

In the diagnostic system according to aspect 1 or 2, the machining unit controls the tool to perform the test machining on the test piece and the machining on the workpiece in succession.

### Aspect 4

In the diagnostic system according to any one of aspects 1 to 3, the determination unit calculates the degree of abnormality using learning means based on a feature value of the sensor data of the test machining on the test piece.

### Aspect 5

In the diagnostic system according to any one of aspects 1 to 4, the test piece includes a material to be machined by the tool.

### Aspect 6

In the diagnostic system according to any one of aspects 1 to 4, the tool is one of a plurality of tools different from each other, and the diagnostic system includes a plurality of test pieces respectively corresponding to the plurality of tools.

### Aspect 7

In the diagnostic system according to any one of aspects 1 to 6, the test piece includes the sensor.

### Aspect 8

The diagnostic system according to any one of aspects 1 to 7 further includes a collection unit, a signal processing unit, and a feature value calculation unit.

The collection unit collects operation information of the tool and the sensor data and associates the operation information with the sensor data. The signal processing unit performs pre-processing of the sensor data. The feature value calculation unit calculates the feature value of the pre-processed sensor data.

The determination unit calculates the degree of abnormality from the feature value calculated by the feature value calculation unit.

### Aspect 9

A diagnostic method includes performing, with a tool, test machining on a test piece for abnormal detection in a given timing in each cycle of machining on a workpiece subjected to machining by the tool; receiving, from a sensor, sensor data representing a physical quantity generated in the test machining on the test piece; and calculating a degree of abnormality from the sensor data of the test machining on the test piece. The test piece is different from workpieces subjected to machining by the tool. The test machining is performed in accordance with the machining performed on the workpiece.

In another aspect, a diagnostic method includes:
collecting operation information of test machining performed on a test piece by a tool in each machining cycle on a workpiece subjected to machining by the tool, the test piece being different from the workpiece, the test machining being performed under a test machining condition corresponding to a machining condition of the machining on the workpiece;
collecting sensor data representing a physical quantity generated in the test machining;
associating the operation information of each test machining with the sensor data, to obtain a grouped time-series data of same operation information; and
calculating a degree of abnormality of the sensor data of the test machining with reference to the grouped time-series data.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A diagnostic system comprising:
a tool (500) configured to perform machining on a workpiece;
a test piece (400) to be subjected to test machining by the tool (500) for abnormal detection, the test piece (400) being different from the workpiece;
a sensor (201) configured to generate sensor data representing a physical quantity generated in the test machining;
a machining unit (210) configured to control the tool (500) to perform the test machining in each cycle of machining on the workpiece, the test machining being performed on the test piece (400) under a test machining condition corresponding to a machining condition of the machining on the workpiece; and
a determination unit (104) configured to calculate a degree of abnormality from the sensor data of the test machining.

2. The diagnostic system according to claim 1, further comprising an operation determination unit (104) configured to:
determine an action for the tool (500) based on the degree of abnormality calculated by the determination unit (104); and
output a command indicating the action for the tool (500).

3. The diagnostic system according to claim 1 or 2,
wherein the machining unit (210) controls the tool (500) to perform the test machining on the test piece (400) and the machining on the workpiece in succession.

4. The diagnostic system according to any one of claims 1 to 3,
wherein the determination unit (104) calculates the degree of abnormality using learning means based on a feature value of the sensor data of the test machining on the test piece (400).

5. The diagnostic system according to any one of claims 1 to 4,
wherein the test piece (400) includes a material to be machined by the tool (500).

6. The diagnostic system according to any one of claims 1 to 4,
wherein the tool (500) is one of a plurality of tools (500) different from each other, and
wherein the diagnostic system includes a plurality of test pieces (400) including the test piece (400), the plurality of test pieces (400) respectively corresponding to the plurality of tools (500).

7. The diagnostic system according to any one of claims 1 to 6,
wherein the test piece (400) includes the sensor (201).

8. The diagnostic system according to any one of claims 1 to 7, further comprising:
a collection unit (101) configured to collect operation information of the tool (500) and the sensor data and associate the operation information with the sensor data;
a signal processing unit (102) configured to perform pre-processing of the sensor data; and
a feature value calculation unit (103) configured to calculate a feature value of the pre-processed sensor data,
wherein the determination unit (104) calculates the degree of abnormality from the feature value calculated from the pre-processed sensor data.

9. A diagnostic method comprising:
performing, with a tool, test machining on a test piece for abnormal detection in each machining cycle on a workpiece subjected to machining by the tool, the test piece being different from the workpiece, the test machining being performed on the test piece under a test machining condition corresponding to a machining condition of the machining on the workpiece;
receiving (S1), from a sensor, sensor data representing a physical quantity generated in the test machining on the test piece; and
calculating (S2) a degree of abnormality from the sensor data of the test machining on the test piece.

10. The diagnostic method according to claim 9, further comprising:
determining (S3) an action for the tool based on the degree of abnormality calculated by the determination unit (104); and
outputting (S3) a command indicating the action for the tool.

11. A carrier medium carrying computer readable codes for controlling a computer system to carry out the method according to claim 9.
